# EUROPEAN PATENT SPECIFICATION

(11) **EP 0 990 129 B1**
(45) Date of publication and mention of the grant of the patent: **02.10.2002**
(21) Application number: 98937872.4
(22) Date of filing: 30.07.1998
(51) Int. Cl.: G01N 1/08

(54) **DEVICE AND METHOD FOR TAKING SAMPLES, IN PARTICULAR ASBESTOS SAMPLES, FROM WALLS AND THE LIKE**
VERFAHREN UND VORRICHTUNG ZUR PROBEENTNAHME, BEISPIELSWEISE VON ASBEST, AUS DEN WÄNDEN
DISPOSITIF ET PROCEDE PERMETTANT DE PRELEVER DES ECHANTILLONS, EN PARTICULIER DES ECHANTILLONS D'AMIANTE, DE MURS ET ANALOGUES

(30) Priority: 30.07.1997 NL 1006688; 27.08.1997 NL 1006864
(43) Date of publication of application: 05.04.2000
(73) Proprietor: Asselman, Sebastiaan Antonius Maria, 2283 BA Rijswijk (NL)
(72) Inventor: ASSELMAN, Sebastiaan, Antonius, Maria, NL-2283 BA Rijswijk (NL); BOUMANS, Johannes, Adrianus, NL-3405 XK Benschop (NL)
(74) Representative: De Hoop, Eric
(86) International application number: NL9800441
(87) International publication number: WO99006813

(56) References cited:
- WO-A-95/31707
- AU-B- 491 066
- US-A- 4 652 184
- US-A- 4 755 087
- US-A- 4 887 413
- US-A- 5 046 301
- US-A- 5 076 741

## Description

The invention relates to a device for taking samples, in particular asbestos samples, from walls or the like, comprising a house with a drill opening for positioning against a wall and with a suction opening to connect to a suction device for creating an underpressure in the house, a drill with a hollow drill end being arranged in the house such that it is rotatable in a bearing and moveable through the drill opening of the house, the drill being provided with means for pushing the sample out of the hollow drill end.

When renovating or demolishing shops, business premises and houses it should be taken into account that during construction or afterwards material containing asbestos was used. If such is the case then the materials containing asbestos should be removed under strict security measures. Beforehand however it cannot be determined with certainty whether material containing asbestos is present. In those cases samples are therefore taken at various places in the building to be renovated or demolished, which samples are sent to a laboratory to verify whether asbestos is present in them.

According to present practice the samples are taken while using a hollow drill driven by means of a common electrical hand drilling machine. When taking a sample from for instance a wall, dust and grit and the like, plus the asbestos fibres which are possibly released, are manually suctioned with the aid of a special vacuum cleaner which is provided with an asbestos filter; the suction mouth of the vacuum cleaner is kept next to the drill near the wall by hand. After the sample is drilled out of the wall, the sample is taken out of the hollow drill, after which the sample is sent to the laboratory in a sealed-off packaging.

A device of the sort as described in the opening paragraph is known from US-A-5,046,301. A drawback of this known device and the accompanying method is that taking the sample out of the hollow drill end is rather laborious. The drill is hollow over its entire length and through it runs a pushing rod to push the sample out of the drill end into a tube or the like. To do so, both the device and the drill have to be held and the pushing rod has to be pushed through the drill. This is difficult to do for one person only. Because the pushing rod has a push button the drill cannot be taken out via the drill opening either. When removing via the bearing asbestos fibres at the drill end may end up in the bearing and contaminate a next drill.

It is an objective of the invention to provide a device and a method for taking samples, in particular asbestos samples, from walls and the like, which have a high degree of security and which are simple, and with which the sample taken can be removed from the device in a safe and simple manner.

According to a first aspect of the invention this is provided by a device for taking samples, in particular asbestos samples, from walls or the like, comprising a house with a drill opening for positioning against a wall and with a suction opening to connect to a suction device for creating an underpressure in the house, a drill with a hollow drill end being arranged in the house such that it is rotatable in a bearing and moveable through the drill opening of the house, the drill being provided with means for pushing the sample out of the hollow drill end, the means for pushing the sample out of the hollow drill end comprise a slide arranged near the hollow drill end and slideably mounted with respect to the drill, said slide comprising a pushing means situated in the hollow drill end, and a stop provision fixedly attached to the house, said slide comprising stop means for abutting the stop provision.

In this way when the hollow drill end moves to the inside in the house the sample will, as it were, be automatically delivered from the hollow drill end. This is realized since when the slide is pulled to the fixed stop provision by moving the drill towards the inside of the house, the stop means of the slide for abutting the stop provision will abut against the fixed stop provision, so that the pushing member pushes the sample out of the drill end. It is not necessary to separately operate the means for pushing the sample out of the hollow drill end.

According to a preferred embodiment the house is at least partially transparent, so that after drilling it can be checked when all dust and fibres are suctioned out of the house.

According to a preferred embodiment the drill protrudes to the outside through the wall of the house opposite the drill opening and is bearing-mounted in this wall, so that the drill can be activated by a separate electrical hand drilling machine or battery drilling machine.

Preferably the entire drill can be taken from the house via the drill opening, so that it is possible to send the sample still in the drill to the laboratory, for instance when the sample is stuck in the drill.

According to a preferred embodiment the drill opening is provided with a groove for allowing in air in the house, so that sufficient air can be supplied to the underpressure space in the house to take in the fibres and grit and to suction it.

Preferably a counting device is arranged near the bearing which detects and counts the positioning or extracting of a drill, so that each drilling which is performed, and for which a clean drill has to be used each time, is registered.

According to a second aspect the invention also relates to a method for taking a sample, in particular an asbestos sample, from a wall or the like with the aid of a device according to the invention, comprising the following steps:
- connecting a suction device to the suction opening of the device;
- positioning the house with its drill opening against the wall or the like;
- starting the suction device for creating an underpressure in the house;
- having the drill rotate and drilling a sample out of the wall with the aid of the hollow drill end of the drill;
- withdrawing the drill end in the house over a first distance and stopping the drill;
- taking the house off the wall and placing a tube, which is closed on one side, over the hollow drill end, while the suction device keeps on suctioning;
- sliding the sample out of the hollow drill end into the tube, withdrawing the drill end and closing off the tube;
- switching off the suction device, characterized in that, the step of sliding the sample out of the hollow drill end takes place by withdrawing the drill further over a second distance into the house.

By applying this method it is prevented to a high degree that asbestos fibres end up in the environment, as air is suctioned out of the house continuously, also during positioning the tube over the hollow drill end containing the sample and sliding it in the tube. Asbestos fibres that are possibly released during these last actions are also suctioned out of the house by the suction device.

Preferably after withdrawal of the drill end and stopping the drill, a time interval is waited until mainly all loose fibres and the like are suctioned out of the house, so that when taking the device from the wall, fibres cannot as yet be released. The use of a device with at least a partially transparent house is preferred here.

According to a preferred method the drill, which protrudes to the outside from the house, is rotated with the aid of an electric hand drilling machine or a battery drilling machine, so that the drill can easily be disconnected.

Preferably the drill is cleaned after drilling, for instance in a bucket of water, and also preferably the house is cleaned after drilling, so that fibre remnants which have been left behind by accident, cannot end up in the environment.

According to an advantageous method each new drilling is counted with a counting device, so that the number of drillings performed with the device is registered.

Preferably different drills can be used for different walls.

The invention will be elucidated on the basis of three exemplary embodiments, referring to the drawing.

Figure 1 shows a device for taking samples, in particular asbestos samples, from walls and the like not according to the invention.

Figure 2 shows a first exemplary embodiment of the invention.

Figure 3 shows a second exemplary embodiment of the invention.

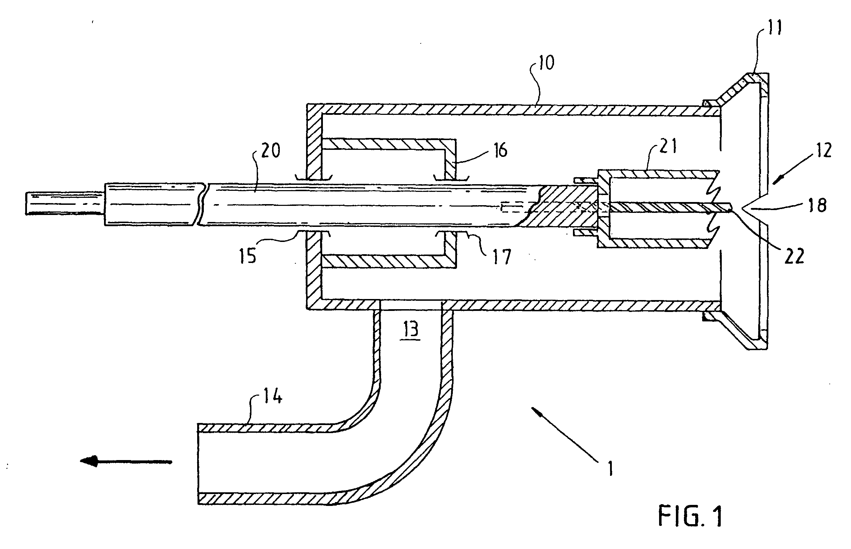

A device 1 for taking samples, in particular asbestos samples, from walls and the like not according to the invention is shown in Figure 1. The device 1 comprises a house 10 with an open end, to which a sealing edge 11 has been arranged which has a drill opening 12. In the sealing edge a V-shaped groove 18 is arranged. In the house 10 a suction opening 13 is arranged, to which a coupling accessory 14 for a suction device (not shown) is connected. Through the house 10 a drill 20 protrudes, which is bearing-mounted in a slide bearing 15 and a slide bearing 17 of an auxiliary plate 16, which is fixedly attached to the house 10, so that the drill 20 has a good straight guiding.

In the house 10 the drill 20 has a hollow drill end 21 with which by rotation of the drill 20 a sample can be taken out of the wall or the like. For that purpose the drill 20 is connected with its other end to an electrical hand drilling machine or battery drilling machine (which are not shown).

Although this is not necessary, in practice a centre drill 22 is arranged in the centre line of the drill 20 which protrudes outside the hollow drill end 21, to facilitate the drilling of the wall.

The house 10 preferably is transparent. A handle can also be arranged on the house 10 to position and keep the device 1 easily against the wall during taking the sample.

A method for taking a sample with the aid of the device 1 is as follows.

A suction device is connected to the coupling accessory 14 and a hand drilling machine is connected to the end of the drill 20 protruding from the house 10. At the location where a sample has to be taken, the device 1 is positioned against the wall or the like with the aid of the sealing edge 11. The suction device, which is provided with a special asbestos filter, is switched on, so that an underpressure is created in the house 10. The hand drilling machine is started and the rotating drill 20 is moved to the wall through the slide bearings 15 and 17, so that the hollow drill end 21 drills a sample out of the wall. During drilling the dust, grit and asbestos fibres that are possibly released, are suctioned out of the house 10 by the suction device, and because of the prevailing underpressure no asbestos fibres will be able to escape out of the house 10 into the environment. In order to discharge the dust, grit and fibres, fresh air is supplied via the V-shaped groove 18. After the sample has been drilled out of the wall by the hollow drill end 21, the drill 20 is withdrawn in the house 10 as far as possible, so that the hollow drill end 21 with the sample is removed from the drill opening 12 as far as possible. While the air keeps being suctioned out of the house 10 with the aid of the suction device, the device 1 is taken from the wall. By keeping on suctioning the air the asbestos fibres that are possibly being released from the sample will not end up in the environment, but are suctioned out of the house 10 by the suction device. Subsequently a tube (not shown) with one open end is then slid over the hollow drill end 21 with the sample, after which the entire drill 20 is slid in the this tube. After that the tube is closed off completely with the aid of a stop, and the tube is ready to be sent to a laboratory, where the sample can be analyzed.

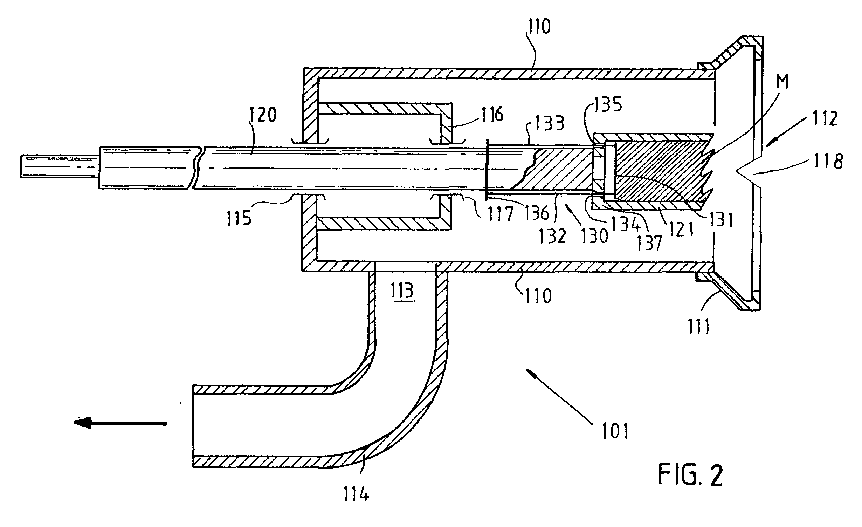

A device 101 according to a first exemplary embodiment of the invention is shown in figure 2, and is substantially similar to the one shown in figure 1. The same parts have the same reference numbers increased by 100. The working of the device 101 for that reason is substantially similar. A centre drill is not shown here, however, but is indeed present in practice.

Special is that on the drill -or drill extension part- 120 near the hollow drill end 121 a slide 130 is arranged.

This slide 130 comprises a pushing plate 131 accommodated in the hollow drill end 121, a ring plate 136 placed around the drill and two little rods 132, 133 which connect the pushing plate 131 and the ring plate 136 to each other in a rigid manner. In the bottom 137 of the hollow drill end 121 two axial holes 134, 135 are made through which the little rods 132, 133 can extend and in which they are guided.

In the situation shown, the hollow drill end is already provided with a sample M of for instance asbestos, which has been drilled out. Now the actions described in the description of figure 1 could be performed. By using the slide 130 however, the sample may automatically be pushed out of the hollow drill end 121, for instance in a sample tube which has been placed around the hollow drill end beforehand. This takes place by withdrawing the drill 120 further back until the ring plate 136 abuts the wall 116 or another similar stationary stop provision. By withdrawing the drill 120 further back the hollow drill end 121 will move with respect to the pushing plate 131, which pushing plate pushes the sample to the outside with respect to the hollow drill end, into the tube. The slide 130 remains on the drill 120 because the bottom 137 forms a stop for the ring plate 136. The distance between the wall 116 and the opening 12 is larger than the largest distance between the ring plate 136 and the end of the drill teeth.

Transferring the sample from the hollow drill end to the tube can in this way take place in an environment protected by the house, during which moreover use can be made of the suction device.

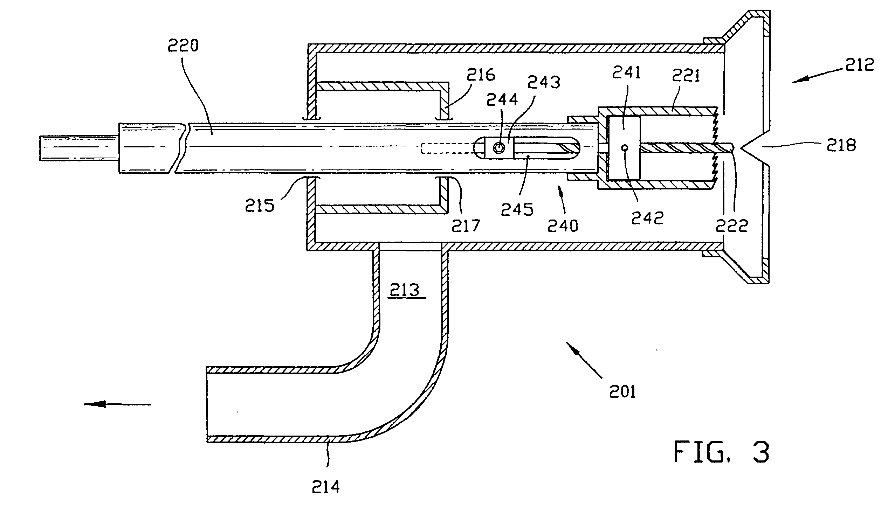

Figure 3 shows another embodiment of the device according to figure 2. With respect to the device of figure 1 the reference numbers of the same parts have been increased by 200.

The slide is referred to with reference number 240 and is fixed to centre drill 222, which is slideably accommodated in the drill rod 220. In the hollow drill end 221 a pushing block 241 is fixed to the centre drill 222 with the aid of a screw 242. Behind the hollow drill end 221 in the drill rod 220 an elongated slot 245 is arranged in which a sliding block 243 can slide. The sliding block 243 is fixed to the centre drill 222 with a screw 244. The sliding block 243 protrudes outside the drill rod 220.

The working of the device according to figure 3 is similar to the device according to figure 2. After a sample has been taken the hollow drill end 221 is withdrawn in the house 210 until the sliding block 243 abuts the auxiliary plate 216. The device is taken from the wall and a tube, which is closed off on one side, is placed over the hollow drill end with the sample. Subsequently the drill rod 220 is further pulled out of the house. The sliding block 243 however is stopped by the auxiliary plate 216, and because of this slides to the fore with respect to the slot 245. The centre drill 222 slides along here, and because of this the pushing block 241 also slides to the fore in the hollow drill end 221 and pushes the sample out of the hollow drill end into the tube.

Also in this embodiment the transfer of the sample into the tube therefore takes place in a simple manner in a protected environment.

With the aid of the device and the method according to the invention it is thus prevented as well as can be that asbestos particles end up in the environment during taking the sample. The person who has to take the sample is thus protected as well as can be against breathing in and being exposed otherwise to asbestos particles.

The invention is not limited to the embodiment described above; the scope of protection is determined by the following claims.

## Claims

1. Device (101; 201) for taking samples (M), in particular asbestos samples, from walls or the like, comprising a house (110) with a drill opening (112; 212) for positioning against a wall and with a suction opening (113; 213) to connect to a suction device for creating an underpressure in the house (110), a drill (120; 220) with a hollow drill end (121; 221) being arranged in the house (110) such that it is rotatable in a bearing and moveable through the drill opening (112; 212) of the house (110), the drill (120; 220) being provided with means (130; 240) for pushing the sample (M) out of the hollow drill end (121; 221), **characterized in that** the means (130; 240) for pushing the sample (M) out of the hollow drill end (121; 221) comprise a slide (130; 240) arranged near the hollow drill end (121; 221) and slideably mounted with respect to the drill (120; 220), said slide (130; 240) comprising a pushing means (131; 241) situated in the hollow drill end (121; 221), and a stop provision (116; 216) fixedly attached to the house (110), said slide (130; 240) comprising stop means (136; 244) for abutting the stop provision (116; 216).

2. Device (101; 201) according to claim 1, in which the house (110) is at least partially transparent.

3. Device (101; 201) according to claim 1 or 2, in which the drill (120; 220) protrudes to the outside through the wall of the house (110) opposite the drill opening (112; 212) and is bearing-mounted (115; 215) in this wall.

4. Device (101; 201) according to claim 3, in which the entire drill (120; 220) can be taken from the house (110) via the drill opening (112; 212).

5. Device (101; 201) according to any one of the preceding claims, in which the drill opening (112; 212) is provided with a groove (118; 218) for allowing air into the house (110).

6. Device (101; 201) according to any one of the preceding claims, in which near the bearing a counting device is arranged which detects and counts the positioning and extracting of a drill (120; 220).

7. Method for taking a sample (M), in particular an asbestos sample, from a wall or the like with the aid of a device (101; 201) according to any one of claims 1-6, comprising the following steps:
- connecting a suction device to the suction opening (113; 213) of the device;
- positioning the house (110) with its drill opening (112; 212) against the wall or the like;
- starting the suction device for creating an underpressure in the house (110);
- having the drill (120; 220) rotate and drilling a sample (M) out of the wall with the aid of the hollow drill end (121; 221) of the drill (120; 220);
- withdrawing the drill end (121; 221) in the house (110) over a first distance and stopping the drill (120; 220);
- taking the house (110) off the wall and placing a tube, which is closed on one side, over the hollow drill end (121; 221), while the suction device keeps on suctioning;
- sliding the sample (M) out of the hollow drill end (121; 221) into the tube, withdrawing the drill end (121; 221) and closing off the tube;
- switching off the suction device, **characterized in that**, the step of sliding the sample (M) out of the hollow drill end (121; 221) takes place by withdrawing the drill (120; 220) further over a second distance into the house (110).

8. Method according to claim 7, in which after withdrawing the drill end (121; 221) and stopping the drill (120; 220) a time interval is waited until mainly all loose fibres and the like are suctioned out of the house (110).

9. Method according to claim 7 or 8, in which the drill (120; 220), which protrudes to the outside from the house (110), is rotated with the aid of an electric hand drilling machine or a battery drilling machine.

10. Method according to any one of the claims 7 - 9, in which the drill (120; 220) is cleaned after drilling.

11. Method according to any one of the claims 7 - 10, in which the house (110) is cleaned after drilling.

12. Method according to any one of the claims 7 - 11, in which each new drilling is counted with a counting device.

13. Method according to any one of the claims 7 - 11, in which different drills (120; 220) can be used for different walls.

## Patentansprüche

1. Vorrichtung (101; 201) zur Entnahme von Proben (M), insbesondere von Asbestproben, aus Wänden oder dergleichen, umfassend: ein Gehäuse (110) mit einer Bohreröffnung (112; 212) zur Positionierung gegen eine Wand und mit einer Saugöffnung (113; 213) zum Anschluss an eine Saugvorrichtung, um in dem Gehäuse (110) einen Unterdruck zu erzeugen, einen Bohrer (120; 220) mit einem hohlen Bohrerende (121; 221), der in dem Gehäuse (110) derart angeordnet ist, dass er in einem Lager drehbar und durch die Bohreröffnung (112; 212) des Gehäuses (110) bewegbar ist, wobei der Bohrer (120; 220) mit Mitteln (130; 240) versehen ist, um die Probe (M) aus dem hohlen Bohrerende (121; 221) hinauszudrücken,
**dadurch gekennzeichnet, dass** die Mittel (130; 240) zum Drücken der Probe (M) aus dem hohlen Bohrerende (121; 221) hinaus einen Schieber (130; 240) aufweisen, der nahe dem hohlen Bohrerende (121; 221) angeordnet und in Bezug auf den Bohrer (120; 220) verschiebbar angebracht ist, wobei der Schieber (130; 240) ein Drückmittel (131; 241) aufweist, das in dem hohlen Bohrerende (121; 221) angeordnet ist, sowie eine Stopp-Vorkehrung (116; 216), die fest an dem Gehäuse (110) angebracht ist, wobei der Schieber (130; 240) Stoppmittel (136; 244) zur Anlage an der Stopp-Vorkehrung (116; 216) aufweist.

2. Vorrichtung (101; 201) nach Anspruch 1, in der das Gehäuse (110) zumindest teilweise transparent ist.

3. Vorrichtung (101; 201) nach Anspruch 1 oder 2, worin der Bohrer (120; 220) durch die Wand des Gehäuses (110) gegenüber der Bohreröffnung (112; 212) nach außen vorsteht und in dieser Wand gelagert (115; 215) ist.

4. Vorrichtung (101; 201) nach Anspruch 3, worin der gesamte Bohrer (120; 220) durch die Bohreröffnung (112; 212) aus dem Gehäuse (110) herausgenommen werden kann.

5. Vorrichtung (101; 201) nach einem der vorhergehenden Ansprüche, in der die Bohreröffnung (112; 212) mit einer Nut (118; 218) versehen ist, um Luft in das Gehäuse (110) zu lassen.

6. Vorrichtung (101; 201) nach einem der vorhergehenden Ansprüche, worin nahe dem Lager eine Zählvorrichtung angeordnet ist, die die Positionierung und Extraktion eines Bohrers (120; 220) erfasst und zählt.

7. Verfahren zum Entnehmen einer Probe (M), insbesondere einer Asbestprobe, aus einer Wand oder dergleichen mit Hilfe einer Vorrichtung (101; 201) nach einem der Ansprüche 1 bis 6, das die folgenden Schritte umfasst:
- Anschließen einer Saugvorrichtung an die Saugöffnung (113; 213) der Vorrichtung;
- Positionieren des Gehäuses (110) mit seiner Bohreröffnung (112; 212) gegen die Wand oder dergleichen;
- Starten der Saugvorrichtung, um in dem Gehäuse (110) einen Unterdruck zu erzeugen;
- Drehen des Bohrers (120; 220) und Bohren einer Probe (M) aus der Wand mit der Hilfe des hohlen Bohrerendes (121; 221) des Bohrers (120; 220);
- Zurückziehen des Bohrerendes (121; 221) in das Gehäuse (110) über einen ersten Weg und Stoppen des Bohrers (120; 220);
- Abnehmen des Gehäuses (110) von der Wand und Anordnen eines Rohrs, das an einer Seite geschlossen ist, über dem hohlen Bohrerende (121; 221), während die Saugvorrichtung weitersaugt;
- Schieben der Probe (M) aus dem hohlen Bohrerende (121; 221) hinaus in das Rohr, Zurückziehen des Bohrerendes (121; 221) und Verschließen des Rohrs;
- Abschalten der Saugvorrichtung;
**dadurch gekennzeichnet, dass** der Schritt des Schiebens der Probe (M) aus dem hohlen Bohrerende (121; 221) erfolgt, indem der Bohrer (120; 220) weiter über einen zweiten Weg in das Gehäuse (110) zurückgezogen wird.

8. Verfahren nach Anspruch 7, worin nach dem Zurückziehen des Bohrerendes (121; 221) und Stoppen des Bohrers (120; 220) ein Zeitintervall abgewartet wird, bis hauptsächlich alle losen Fasern und dergleichen aus dem Gehäuse (110) herausgesaugt sind.

9. Verfahren nach Anspruch 7 oder 8, worin der Bohrer (120; 220), der aus dem Gehäuse (110) zur Außenseite vorsteht, mit Hilfe einer elektrischen Handbohrmaschine oder einer Batteriebohrmaschine gedreht wird.

10. Verfahren nach einem der Ansprüche 7 - 9, worin der Bohrer (120; 220) nach dem Bohren gereinigt wird.

11. Verfahren nach einem der Ansprüche 7 - 10, worin das Gehäuse (110) nach dem Bohren gereinigt wird.

12. Verfahren nach einem der Ansprüche 7 - 11, in dem jeder neue Bohrvorgang mit einer Zählvorrichtung gezählt wird.

13. Verfahren nach einem der Ansprüche 7 - 11, worin für verschiedene Wände verschiedene Bohrer (120; 220) verwendet werden können.

## Revendications

1. Dispositif (101 ; 201) pour prélever des échantillons (M), en particulier des échantillons d'amiante, à partir de murs ou similaires, comprenant un logement (110) avec une ouverture de forage (112 ; 212) pour le positionnement contre une paroi et avec une ouverture d'aspiration (113 ; 213) pour la connexion à un dispositif d'aspiration afin de créer une sous-pression dans le logement (110), un foret (120 ; 220) avec une extrémité de forage creuse (121 ; 221) disposée dans le logement (110) de sorte qu'il puisse tourner dans un support et se déplacer à travers l'ouverture de forage (112 ; 212) du logement (110), le foret (120 ; 220) étant muni de moyens (130 ; 240) pour pousser l'échantillon (M) hors de l'extrémité de forage creuse (121 ; 221), **caractérisé en ce que** les moyens (130 ; 240) pour pousser l'échantillon (M) hors de l'extrémité de forage creuse (121 ; 221) comprennent un coulisseau (130 ; 240) disposé à proximité de l'extrémité de forage creuse (121 ; 221) et monté de manière coulissante par rapport au foret (120 ; 220), ledit coulisseau (130 ; 240) comprenant des moyens de poussée (131 ; 241) situés dans l'extrémité de forage creuse (121 ; 221), et un arrêt (116 ; 216) fixé de manière solide au logement (110), ledit coulisseau (130 ; 240) comprenant des moyens d'arrêt (136 ; 244) pour venir en butée contre l'arrêt (116 ; 216).

2. Dispositif (101 ; 201) selon la revendication 1, dans lequel le logement (110) est au moins partiellement transparent.

3. Dispositif (101 ; 201) selon la revendication 1 ou 2, dans lequel le foret (120 ; 220) fait saillie vers l'extérieur à travers la paroi du logement (110) à l'opposé de l'ouverture de forage (112 ; 212) et est monté sur support (115 ; 215) dans cette paroi.

4. Dispositif (101 ; 201) selon la revendication 3, dans lequel le foret en entier (120 ; 220) peut être retiré du logement (110) par l'intermédiaire de l'ouverture de forage (112 ; 212),

5. Dispositif (101 ; 201) selon l'une quelconque des revendications précédentes, dans lequel l'ouverture de forage (112 ; 212) est munie d'une rainure (118 ; 218) pour permettre à de l'air de pénétrer dans le logement (110).

6. Dispositif (101 ; 102) selon l'une quelconque des revendications précédentes, dans lequel, à proximité du support, un dispositif de comptage est disposé pour détecter et compter le positionnement et l'extraction d'un foret (120 ; 220).

7. Procédé pour prélever un échantillon (M), en particulier un échantillon d'amiante, à partir d'un mur ou similaire à l'aide d'un dispositif (101 ; 201) selon l'une quelconque des revendications 1 à 6, comprenant les étapes suivantes :
- connecter un dispositif d'aspiration à l'ouverture d'aspiration (113 ; 213) du dispositif ;
- positionner le logement (110) avec son ouverture de forage (112 ; 212) contre la paroi ou similaire ;
- mettre en marche le dispositif d'aspiration pour créer une sous-pression dans le logement (110) ;
- faire tourner le foret (120 ; 220) et forer un échantillon (M) hors de la paroi à l'aide de l'extrémité de forage creuse (121 ; 221) du foret (120 ; 220) ;
- retirer l'extrémité de forage (121 ; 221) dans le logement (110) sur une première distance et arrêter le foret (120 ; 220) ;
- retirer le logement (110) de la paroi et placer un tube, qui est fermé du niveau d'un côté, sur l'extrémité de forage creuse (121 ; 221), tandis que le dispositif d'aspiration continue d'aspirer ;
- faire coulisser l'échantillon (M) hors de l'extrémité de forage creuse (121 ; 221) dans le tube, retirer l'extrémité de forage (121 ; 221) et fermer le tube ;
- mettre hors service le dispositif d'aspiration, **caractérisé en ce que** l'étape consistant à faire coulisser l'échantillon (M) hors de l'extrémité de forage creuse (121 ; 221) est réalisée en retirant le foret (120 ; 220) davantage sur une seconde distance dans le logement (110).

8. Procédé selon la revendication 7, dans lequel, après le retrait de l'extrémité de forage (121 ; 221) et l'arrêt du foret (120 ; 220), il faut attendre un intervalle de temps jusqu'à ce que principalement toutes les fibres lâches et similaires soient aspirées hors du logement (110).

9. Procédé selon la revendication 7 ou 8, dans lequel le foret (120 ; 220), qui fait saillie vers l'extérieur depuis le logement (110), est mis en rotation à l'aide d'une foreuse à main électrique ou d'une foreuse à batterie.

10. Procédé selon l'une quelconque des revendications 7 à 9, dans lequel le foret (120 ; 220) est nettoyé après forage.

11. Procédé selon l'une quelconque des revendications 7 à 10, dans lequel le logement (110) est nettoyé après forage.

12. Procédé selon l'une quelconque des revendications 7 à 11, dans lequel chaque nouveau forage est compté à l'aide d'un dispositif de comptage.

13. Procédé selon l'une quelconque des revendications 7 à 11, dans lequel différents forets (120 ; 220) peuvent être utilisés pour différentes parois.
